# EUROPEAN PATENT APPLICATION

(11) **EP 1 834 989 A1**
(43) Date of publication of application: **19.09.2007**
(21) Application number: 05816776.8
(22) Date of filing: 13.12.2005
(51) Int. Cl.: C08L 27/06, C08L 101/00

(54) **THERMOPLASTIC RESIN COMPOSITION**

(30) Priority: 27.12.2004 JP 2004375967; 27.01.2005 JP 2005019501; 28.02.2005 JP 2005052783; 28.02.2005 JP 2005052856; 06.09.2005 JP 2005258145
(71) Applicant: Kaneka Corporation, Kita-ku Osaka-shi, Osaka 530-8288 (JP)
(72) Inventor: YUI, Koji, Kobe-shi, Hyogo 6512113 (JP); AOKI, Yusuke, Takasago-shi, Hyogo 6760026 (JP); UEDA, Takashi, 6750301 Hyogo (JP)
(74) Representative: Vossius & Partner
(86) International application number: PCT/JP2005/022823
(87) International publication number: WO 2006/070593

(57) **Abstract**

An object of the present invention is to propose a novel thermoplastic resin composition capable of exhibiting high impact resistance using an impact modifier isolated as a resin powder without coarsening or agglomeration. A thermoplastic resin composition includes 100 parts by weight of a thermoplastic resin (a) and 0.5 to 20 parts by weight of an impact modifier (b) containing a graft copolymer (b-1) containing a butadiene rubber polymer and a rigid shell, a water-soluble polymer compound (b-2) having a physical gel-forming property, and a gelling agent (b-3). In the thermoplastic resin composition, the content of the water-soluble polymer compound (b-2) having the physical gel-forming property is 0.01 to 3.0 parts by weight relative to 100 parts by weight of the graft copolymer (b-1) and the content of the rigid shell in the graft copolymer (b-1) is 1 to 20 percent by weight.

## Description

### Technical Field

The present invention relates to a thermoplastic resin composition having excellent impact resistance.

### Background Art

In order to improve the impact resistance of thermoplastic resins, addition of graft copolymers produced by emulsion polymerization or suspension polymerization has been widely practical. For example, it is known that a graft copolymer having diene or acrylate is blended in vinyl chloride resins (for example, refer to Patent Documents 1 and 2).

Various processes of improving the effect of imparting impact resistance to thermoplastic resins by graft copolymers are known. It is known that, among these, a process of increasing the content of a rubber component in a graft copolymer is effective to achieve the object. In particular, it is believed that setting the ratio by weight of a rubber component of a graft copolymer to at least 80 percent by weight is an effective method for highly imparting the impact resistance.

However, in use of the above method, the particles themselves become sticky. Consequently, when particles of the graft copolymer are isolated from a latex prepared by emulsion polymerization or slurry prepared by suspension polymerization, the particles may be coarsened or agglomerated. If such a resin is blended in a thermoplastic resin, a sufficient effect of improving impact resistance cannot be achieved and, in addition, the resin may cause a defect in appearance of moldings. The reason for this is as follows: Such an impact modifier that is easily coarsened or agglomerated is not homogeneously mixed when blended with thermoplastic resins. Furthermore, when a coarsened or agglomerated impact modifier is blended with thermoplastic resins and is then processed, the impact modifier is not sufficiently dispersed. Such a phenomenon of the poor dispersion has been confirmed by electron microscopy of moldings. Therefore, for example, in the case of vinyl chloride resins, an impact modifier is blended and a step of removing coarsened or agglomerated particles is then generally performed with a sieve or the like before the resulting resin is processed.

Accordingly, products of impact modifier from which coarsened particles are previously removed are industrially used. In view of the cost, it is advantageous that the amount of coarsened particles is reduced as much as possible in the production of impact modifiers. Thus, it is essential that the ratio by weight of a rubber component in a graft copolymer be limited.

A known process for isolating a resin as powder having low stickiness from a sticky rubbery polymer latex is a process of adding a high-molecular-weight polyanion having a carboxyl group and/or a hydroxyl group in its molecule to a rubber latex, and adding dropwise the mixed latex to an aqueous solution containing at least one alkaline earth metal (for example, refer to Patent Document 3).

However, according to the description of this process, unless at least 2 to 8 parts by weight and preferably 4 to 6 parts by weight of the high-molecular-weight polyanion is added relative to 100 parts by weight of rubber solid component in the rubber latex, the stickiness of the isolated resin powder cannot be suppressed. In general, it is obvious that when 4 parts by weight or more of a foreign matter (i.e., in this case, the high-molecular-weight polyanion) is added to a polymer latex, the original quality of the isolated polymer composition itself usable for various purposes is impaired. In particular, when the above process is applied to a graft copolymer whose content is desirably reduced as much as possible in order to impart impact resistance to thermoplastic resins and the like, the quality, for example, the effect of imparting impact resistance is inevitably degraded. Therefore, the above process is not a satisfactory process.

As a process for isolating a flexible resin having a low Vicat softening temperature from a latex, a technology in which a surfactant is added to suppress the coarsening is disclosed (for example, refer to Patent Document 4). In this process, however, in the case of a latex of a graft copolymer containing a butadiene rubber, since the ratio of a rigid shell of the resin that can be isolated is limited to at least 15 percent by weight, the exhibition of a significant effect of improving impact resistance is limited.

In other words, under the present situation, it is still desirable to develop a thermoplastic resin capable of highly satisfying conflicting properties including the improvement of impact resistance, the degradation of quality, and the increase in cost that are caused by adding an impact modifier.
Patent Document 1: Japanese Examined Patent Application Publication No. 39-19035
Patent Document 2: Japanese Examined Patent Application Publication No. 42-22541
Patent Document 3: Japanese Unexamined Patent Application Publication No. 52-37987
Patent Document 4: Japanese Unexamined Patent Application Publication No. 8-217817

### Disclosure of Invention

### Problems to be Solved by the Invention

It is an object of the present invention to propose a novel thermoplastic resin composition capable of exhibiting high impact resistance using an impact modifier isolated as a resin powder without coarsening or agglomeration.

### Means for Solving the Problems

In view of the above present situation, the present inventors have conducted intensive research in order to achieve a significantly high effect of improving impact resistance while maintaining qualities other than the impact resistance, and found that high impact resistance can be exhibited by blending an impact modifier containing a specific graft copolymer (b-1), a water-soluble polymer compound (b-2) having a physical gel-forming property, and a gelling agent (b-3) in a thermoplastic resin composition. Consequently, the present invention has been accomplished.

The present invention relates to a thermoplastic resin composition including 100 parts by weight of a thermoplastic resin (a) and 0.5 to 20 parts by weight of an impact modifier (b) containing a graft copolymer (b-1) containing a butadiene rubber polymer and a rigid shell, a water-soluble polymer compound (b-2) having a physical gel-forming property, and a gelling agent (b-3). In the thermoplastic resin composition, the content of the water-soluble polymer compound (b-2) having the physical gel-forming property is 0.01 to 3.0 parts by weight relative to 100 parts by weight of the graft copolymer (b-1) and the content of the rigid shell in the graft copolymer (b-1) is 1 to 20 percent by weight.

A preferred embodiment relates to the above thermoplastic resin composition, wherein the rigid shell in the graft copolymer (b-1) is a rigid shell prepared by polymerizing a monomeric mixture containing 0 to 100 percent by weight of a (meth)acrylic ester, 0 to 90 percent by weight of an aromatic vinyl monomer, 0 to 25 percent by weight of a vinyl cyanide monomer, and 0 to 20 percent by weight of a vinyl monomer copolymerizable with the (meth)acrylic ester, the aromatic vinyl monomer, and the vinyl cyanide monomer, the rigid shell having a glass transition temperature of 30°C or higher. In the present invention, unless otherwise stated, the term "(meth) acrylic" means acrylic and/or methacrylic.

A preferred embodiment relates to any one of the above thermoplastic resin compositions, wherein the butadiene rubber polymer in the graft copolymer (b-1) has a volume-average particle size of 0.05 to 1.0 µm.

A preferred embodiment relates to any one of the above thermoplastic resin compositions, wherein the graft copolymer (b-1) includes 2 to 16 percent by weight of the rigid shell.

A preferred embodiment relates to any one of the above thermoplastic resin compositions, wherein the graft copolymer (b-1) includes 2 to 13 percent by weight of the rigid shell.

A preferred embodiment relates to any one of the above thermoplastic resin compositions, wherein the impact modifier (b) further includes 0.05 to 3.0 parts by weight of an anti-blocking agent (b-4) relative to 100 parts by weight of the graft copolymer (b-1).

A preferred embodiment relates to any one of the above thermoplastic resin compositions, wherein the impact modifier (b) includes 0.05 to 1.8 parts by weight of the water-soluble polymer compound (b-2) having the physical gel-forming property relative to 100 parts by weight of the graft copolymer (b-1).

A preferred embodiment relates to any one of the above thermoplastic resin compositions, wherein the water-soluble polymer compound (b-2) having the physical gel-forming property is at least one compound selected from hydroxyethylmethylcellulose, hydroxypropylmethylcellulose, carboxymethylcellulose, water-soluble alginic acid derivatives, agar, gelatin, carrageenan, glucomannan, pectin, curdlan, gellan gum, and polyacrylic acid derivatives.

A preferred embodiment relates to the above thermoplastic resin composition, wherein the water-soluble polymer compound (b-2) having the physical gel-forming property is a water-soluble alginic acid derivative.

A preferred embodiment relates to the above thermoplastic resin composition, wherein the anti-blocking agent (b-4) is a crosslinked polymer.

A preferred embodiment relates to the above thermoplastic resin composition, wherein the anti-blocking agent (b-4) is a silicone oil.

A preferred embodiment relates to any one of the above thermoplastic resin compositions, wherein the thermoplastic resin is a vinyl chloride resin.

### Effects of the Invention

The thermoplastic resin composition of the present invention can exhibit high impact resistance using an impact modifier isolated as a resin powder without coarsening or agglomeration.

### Best Mode for Carrying Out the Invention

As a graft copolymer (b-1) of the present invention, for example, graft copolymers produced by emulsion polymerization, suspension polymerization, microsuspension polymerization, miniemulsion polymerization, or aqueous dispersion polymerization can be used. Among these, from the viewpoint that structures can be easily controlled, graft copolymers produced by emulsion polymerization can be preferably used.

A butadiene rubber polymer in the graft copolymer (b-1) is not particularly limited as long as the polymer is a polybutadiene rubber polymer or a copolymer prepared by copolymerizing a butadiene monomer and a vinyl monomer or a monomeric mixture that is copolymerizable with the butadiene monomer. In view of the impact resistance of the resulting thermoplastic resin composition, the ratio of the butadiene in the butadiene rubber polymer is preferably at least 50 percent by weight and more preferably at least 65 percent by weight. When the resulting thermoplastic resin composition is used for an application requiring transparency, it is preferable that the difference between the refractive index of the butadiene rubber polymer in the graft copolymer (b-1) and the refractive index of the thermoplastic resin is small. The difference in the refractive indices is preferably 0.02 or less. For example, when the thermoplastic resin is a vinyl chloride resin, the ratio of butadiene in the butadiene rubber polymer is particularly preferably 65 to 90 percent by weight. As the vinyl monomer copolymerizable with the butadiene monomer, butyl acrylate, 2-ethylhexyl acrylate, styrene, acrylonitrile, or the like can be suitably used. In polymerization to produce any of the butadiene rubber polymers, because of the self-crosslinking effect of a butadiene monomer, the monomer can be polymerized to a crosslinked butadiene rubber even without using a multifunctional monomer. However, multifunctional monomers such as divinylbenzene, 1,3-butylene glycol dimethacrylate, allyl methacrylate, and diallyl phthalate may be appropriately used. A chain transfer agent such as n-dodecylmercaptan or tert-dodecylmercaptan may also be used.

With respect to the particle size of the butadiene rubber polymer, in view of the impact resistance of the resulting thermoplastic resin composition, the volume-average particle size of the butadiene rubber polymer is preferably 0.01 to 1.0 µm, more preferably 0.03 to 0.5 µm, and particularly preferably 0.05 to 0.3 µm. A method for obtaining a particle size in this range is not particularly limited. When the butadiene rubber polymer is prepared by emulsion polymerization, examples of the method include a method of adding an acid, a salt, or a latex containing an acid radical as an enlarging agent during or after polymerization and a method of seed polymerization. The volume-average particle size may be measured with, for example, a MICROTRAC UPA (manufactured by NIKKISO Co., Ltd.).

The rigid shell in the graft copolymer (b-1) is not particularly limited. From the viewpoint of dispersibility of the graft copolymer in thermoplastic resins, a preferred example thereof is a rigid polymer prepared by polymerizing a monomeric mixture containing 0 to 100 percent by weight of a (meth)acrylic ester, 0 to 90 percent by weight of an aromatic vinyl monomer, 0 to 25 percent by weight of a vinyl cyanide monomer, and 0 to 20 percent by weight of a vinyl monomer copolymerizable with the (meth)acrylic ester, the aromatic vinyl monomer, and the vinyl cyanide monomer. When two or more of these monomers are used, the monomers may be separately fed in the polymerization system at the same time or continuously or may be previously mixed and then fed in the polymerization system. The term "rigid" in the expression "rigid shell" means that the glass transition temperature (hereinafter also referred to as Tg) of a polymer is 30°C or higher. From the viewpoint described below, the glass transition temperature of the rigid polymer is preferably 50°C or higher. In the case where the glass transition temperature of the rigid shell is lower than 30°C, the compatibility with a thermoplastic resin is decreased by blending the impact modifier of the present invention with the thermoplastic resin such as a vinyl chloride resin. Consequently, it may be difficult to achieve a significant effect of improving impact resistance and coarsening and agglomeration of the graft copolymer particles may easily occur.

The glass transition temperatures of polymers may be measured with a differential scanning calorimeter or the like. However, values calculated by the Fox equation using the values described in Polymer Handbook (J. Brandrup Interscience, 1989) are used in the present invention. (For example, the glass transition temperature of poly(methyl methacrylate) is 105°C, that of polystyrene is 105°C, and that of poly(butyl acrylate) is -54°C.)

The ratio of the rigid shell in the graft copolymer (b-1) is preferably 1 to 20 percent by weight, more preferably 2 to 16 percent by weight, and particularly preferably 2 to 13 percent by weight. When the ratio by weight of the rigid shell in the graft copolymer (b-1) exceeds 20 percent by weight, the effect of improving impact resistance tends to decrease. On the other hand, in the case where the ratio by weight of the rigid shell in the graft copolymer (b-1) is less than 1 percent by weight, when the graft copolymer (b-1) is used as an impact modifier for a thermoplastic resin such as a vinyl chloride resin, the compatibility between the graft copolymer (b-1) and the thermoplastic resin is decreased. Consequently, the effect of improving impact resistance tends to be difficult to achieve.

When the graft copolymer (b-1) is prepared by emulsion polymerization, in order to obtain a desired particle size after graft polymerization, the above-described method of enlarging the size of rubber particles may be employed. Alternatively, a method of enlarging particles during graft polymerization may be employed. Examples of the method include, but are not particularly limited to, a method of adding a salt serving as an enlarging agent before graft polymerization and a method of adding an acid, a salt, a latex containing an acid radical, or the like serving as an enlarging agent during graft polymerization.

After polymerization to produce the graft copolymer (b-1), an antioxidant such as a phenol-based antioxidant, a sulfur-based antioxidant, or a hindered amine-based antioxidant may be used according to need.

In the present invention, a water-soluble polymer compound (b-2) having a physical gel-forming property may be incorporated together with the graft copolymer (b-1). Herein, the term "physical gel" means a gel containing physical crosslinking formed by hydrogen bonds, ionic bonds, or the formation of chelates between polymer molecules. The phrase "having a physical gel-forming property" means that a change from a viscous fluid (sol) to an elastomer (gel) can be visually observed when a gelling agent such as an inorganic salt or acid is added to an aqueous solution containing only a water-soluble polymer compound. In the present invention, the term "water-soluble polymer compound (b-2) having a physical gel-forming property" is defined as a water-soluble polymer compound having the above property.

The water-soluble polymer compound having a physical gel-forming property usable in the present invention is not particularly limited as long as the above property can be exhibited. For example, a water-soluble polymer compound composed of a compound or a mixture containing two or more compounds selected from the following group can be used. Examples thereof include water-soluble alginic acid derivatives such as alginic acid, sodium alginate, potassium alginate, and ammonium alginate; hydroxyethylmethylcellulose; hydroxypropylmethylcellulose; carboxymethylcellulose; agar; gelatin; carrageenan; glucomannan; pectin; curdlan; gellan gum; and polyacrylic acid derivatives. In order to achieve the object of the present invention, among these, carboxymethylcellulose, water-soluble alginic acid derivatives, and polyacrylic acid derivatives are more preferable. Among these, water-soluble alginic acid derivatives are most preferably used.

The ratio between mannuronic acid and guluronic acid in the water-soluble alginic acid derivative is not particularly limited. However, a higher ratio of guluronic acid is preferable because the ability of forming a physical gel tends to increase. Therefore, the ratio of guluronic acid in the water-soluble alginic acid derivative is generally at least 5 percent by weight and more preferably at least 30 percent by weight.

The content of the water-soluble polymer compound (b-2) having the physical gel-forming property in the present invention is preferably 0.01 to 3.0 parts by weight and more preferably 0.05 to 1.8 parts by weight relative to 100 parts by weight of the graft copolymer (b-1). In the case where the content of the water-soluble polymer compound (b-2) having the physical gel-forming property is less than 0.01 parts by weight, coarsening and agglomeration tend to occur in isolation of the impact modifier. On the other hand, when the content of the water-soluble polymer compound (b-2) having the physical gel-forming property exceeds 3.0 parts by weight, the effect of suppressing coarsening and agglomeration in isolation of the impact modifier can be improved but a large amount of water-soluble polymer compound (including substances derived from the water-soluble polymer compound) remains in the impact modifier. Consequently, qualities such as the effect of imparting impact resistance and thermal stability during molding tend to degrade.

Examples of the gelling agent (b-3) usable in the present invention include inorganic salts such as sodium chloride, potassium chloride, lithium chloride, sodium bromide, potassium bromide, lithium bromide, potassium iodide, lithium iodide, potassium sulfate, ammonium sulfate, sodium sulfate, ammonium chloride, sodium nitrate, potassium nitrate, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum, and iron alum; inorganic acids such as hydrochloric acid, sulfuric acid, nitric acid, and phosphoric acid; organic acids such as acetic acid and formic acid; and organic acid salts such as sodium acetate, calcium acetate, sodium formate, and calcium formate. These may be used alone or as a mixture. Among these, inorganic salts such as sodium chloride, potassium chloride, ammonium sulfate, sodium sulfate, ammonium chloride, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum, and iron alum; inorganic acids such as hydrochloric acid, sulfuric acid, nitric acid, and phosphoric acid; and organic acids such as acetic acid and formic acid can be preferably used alone or in combinations of two or more of the gelling agents.

In the present invention, when a water-soluble alginic acid derivative is used as the water-soluble polymer compound (b-2) having the physical gel-forming property, calcium chloride, ferrous sulfate, ferrous chloride, ferric chloride, ferric sulfate, aluminum sulfate, or the like can be suitably used as the gelling agent (b-3).

The amount of the gelling agent (b-3) added in the present invention is not particularly limited. Preferably, most part of the gelling agent (b-3) can be washed away in a water washing process when the graft copolymer is isolated. Preferably, less than 1 part by weight and more preferably 0.01 to 0.5 parts by weight of the gelling agent (b-3) relative to 100 parts by weight of the graft copolymer (b-1) remains. In the case where the residual amount of the gelling agent (b-3) in the graft copolymer (b-1) exceeds 1 part by weight, for example, when the composition is blended with a vinyl chloride resin, the processability during molding may be changed. In this case, a high impact resistance effect tends to be difficult to exhibit and, in addition, a problem such as the yellowing of moldings may occur.

The amount of the gelling agent (b-3) used in the isolation of the graft copolymer is not particularly limited as long as the residual amount of the gelling agent (b-3) is less than 1 part by weight relative to 100 parts by weight of the graft copolymer (b-1). In view of ease of the isolation and the production cost, the amount of the gelling agent (b-3) used is preferably 0.2 to 20 parts by weight and more preferably 1 to 10 parts by weight relative to the graft copolymer (b-1).

In the present invention, the purposes of incorporating the water-soluble polymer compound (b-2) having the physical gel-forming property and the gelling agent (b-3) therefor in an impact modifier (b) are as follows: (1) A non-sticky physical gel coexists in coagulated particles of the graft copolymer, thereby improving the blocking resistance of the coagulated particles in the course of isolation and the shape retention of coagulated particles (impartation of elasticity to coagulated particles). (2) A dry product of a non-sticky physical gel coexists in coagulated particles, thereby improving the blocking resistance of the coagulated particles and the shape retention of the coagulated particles (impartation of elasticity to the coagulated particles) even after the coagulated particles are dried. Thus, coarsening and agglomeration can be suppressed.

Japanese Unexamined Patent Application Publication No. 52-37987 discloses a process performed under regulated conditions as a process for granulating a rubbery polymer latex that is extremely difficult to isolate in a particle form. In the process, a high-molecular-weight polyanion having a carboxyl group and/or a hydroxyl group in its molecule is added to a rubber latex and the mixed latex is added dropwise to an aqueous solution containing at least one alkaline earth metal. However, according to the description of this process, at least 2.0 parts by weight and preferably at least 4.0 parts by weight of the high-molecular-weight polyanion must be added relative to 100 parts by weight of the polymeric solid content in the rubber latex. In other words, in this process, at least 4.0 parts by weight of the high-molecular-weight polyanion must be added in order to suppress the coarsening and the agglomeration of the isolated polymeric coagulated particles.

In general, it is obvious that when no less than 4.0 parts by weight of a foreign matter (i.e., in this case, the high-molecular-weight polyanion) is incorporated in a polymer, various types of qualities such as impact resistance strength and thermal stability of the original rubber polymer are impaired. As a result, it is difficult to achieve the object of the present invention, that is, to satisfy the quality (for example, the effect of improving impact resistance) at a high level.

In the present invention, by using the graft copolymer (b-1) including a butadiene rubber polymer and a rigid shell, the content of the water-soluble polymer compound (b-2) having the physical gel-forming property, which is a foreign matter, can be set to 0.01 to 3.0 parts by weight and preferably 0.05 to 1.8 parts by weight. As a result, an impact modifier with suppressed coarsening and agglomeration can be obtained, and thus it becomes possible to exhibit qualities such as the significant effect of improving impact resistance and thermal stability.

According to the present invention, in the impact modifier containing a water-soluble polymer compound having a physical gel-forming property, a graft copolymer, and a gelling agent, 0.05 to 3.0 parts by weight, preferably 0.1 to 3.0 parts by weight, and more preferably 0.2 to 2.5 parts by weight of an anti-blocking agent (b-4) may be added relative to 100 parts by weight of the graft copolymer (b-1). Thereby, it becomes possible to achieve the object of the present invention, i.e., to improve impact resistance and satisfy the balance with other qualities at a higher level using an impact modifier with suppressed coarsening and agglomeration.

The anti-blocking agent (b-4) usable in the present invention is not particularly limited. From the viewpoint that the quality such as the effect of improving impact resistance, and the effect of suppressing coarsening and agglomeration can be satisfied at a higher level, for example, a crosslinked polymer, a silicone oil, and/or a polyvalent metal salt of an anionic surfactant can be used. Among these, a crosslinked polymer and/or a silicone oil can be suitably used.

The crosslinked polymer that can be used for the above purpose is not particularly limited. A crosslinked polymer prepared by polymerizing 30 to 60 percent by weight of methyl methacrylate, 65 to 35 percent by weight of an aromatic vinyl monomer, 0.1 to 25 percent by weight of a crosslinkable monomer, and 0 to 30 percent by weight of another copolymerizable monomer (the total of these components comes to 100 percent by weight) can be suitably used from the viewpoint that the quality such as the effect of improving impact resistance, and the effect of suppressing coarsening and agglomeration can be satisfied at a high level. However, the crosslinked polymer is not limited thereto.

Examples of the aromatic vinyl monomer include styrene and α-methylstyrene. Examples of the crosslinkable monomer include compounds each having two or more functional groups per molecule such as divinylbenzene, 1,3-butylene glycol dimethacrylate, trimethylolpropane tri(meth)acrylate, allyl (meth)acrylate, ethylene glycol di(meth)acrylate, 1,4-butanediol di(meth)acrylate, 1,6-hexanediol (meth)acrylate, diallyl maleate, diallyl itaconate, allyl (meth)acrylate, triallyl cyanurate, triallyl isocyanurate, diallyl phthalate, and triallyl trimesate. Examples of the other copolymerizable monomer include vinyl cyanides such as acrylonitrile and methacrylonitrile, acrylic acid, methacrylic acid, alkyl esters of acrylic acid, and alkyl esters of methacrylic acid other than methyl methacrylate.

The silicone oil that can be used for the above purpose is not particularly limited. An organosiloxane or polyorganosiloxane that has a siloxane bond can be suitably used from the viewpoint that the quality such as the effect of improving impact resistance, and the effect of suppressing coarsening and agglomeration can be satisfied at a high level. However, the silicone oil is not limited thereto.

Examples of the polyvalent metal salt of the anionic surfactant that can be used for the above purpose include polyvalent metal salts of an anionic surfactant such as fatty acid salts, sulfuric esters of higher alcohols, sulfuric ester salts of liquid fatty oil, sulfates of aliphatic amines or aliphatic amides, phosphoric esters of aliphatic alcohols, sulfonates of dibasic fatty acid esters, sulfonates of aliphatic amides, alkylallyl sulfonates, and formalin condensates of naphthalene sulfonates. Among these, fatty acid salts, sulfuric esters of higher alcohols, and sulfonates of dibasic fatty acid esters can be suitably used from the viewpoint that the quality such as the effect of improving impact resistance, and the effect of suppressing coarsening and agglomeration can be satisfied at a high level. However, the polyvalent metal salts of anionic surfactants are not limited thereto.

The volume-average particle size of coagulated particles containing the graft copolymer (b-1), i.e., the impact modifier of the present invention, is not particularly limited as long as the particles are not coarsened or agglomerated. The volume-average particle size may be arbitrarily controlled according to the supply form of dry particles. For example, in the case used for vinyl chloride resins, in general, the volume-average particle size is preferably 50 µm to 1.0 mm and more preferably 75 µm to 700 µm.

In the thermoplastic resin composition of the present invention, for example, vinyl chloride resins, (meth)acrylic resins, styrene resins, carbonate resins, amide resins, ester resins, and olefin resins can be suitably used as the thermoplastic resin. However, the thermoplastic resin is not limited thereto.

An excellent effect can be exhibited, in particular, when the thermoplastic resin composition of the present invention is used as an impact modifier for vinyl chloride resins. Therefore, among the above resins, vinyl chloride resins are preferable. In the present invention, the term "vinyl chloride resins" means a vinyl chloride homopolymer or a copolymer containing at least 70 percent by weight of a unit derived from vinyl chloride.

Since the thermoplastic resin composition of the present invention contains the impact modifier (b) capable of exhibiting excellent impact resistance even in a small amount of addition, the balance between excellent physical properties and the cost, which has been hitherto difficult to achieve, can be accomplished. The content of the impact modifier (b) in the thermoplastic resin composition is not particularly limited. In view of the quality and the cost, the content is preferably 0.5 to 20 parts by weight, more preferably 2 to 17 parts by weight, and particularly preferably 4 to 15 parts by weight. When the content of the impact modifier in the thermoplastic resin composition exceeds 20 parts by weight, the effect of improving impact resistance is sufficient but qualities other than the impact resistance may be degraded and the cost may increase. On the other hand, when the content of the impact modifier (b) in the thermoplastic resin composition is less than 0.5 parts by weight, the satisfactory effect of improving impact resistance may be difficult to achieve.

According to need, additives such as an antioxidant, a heat stabilizer, an ultraviolet absorber, a pigment, an antistatic agent, a lubricant, and a processing aid may be appropriately added to the thermoplastic resin composition of the present invention.

### EXAMPLES

The present invention will now be described in further detail on the basis of examples, but the present invention is not limited to these examples. In examples and comparative examples described below, the term "parts" represents "parts by weight" unless otherwise stated.

### (EXAMPLE 1)

### (Preparation of butadiene rubber polymer (R-1))

Water (200 parts), sodium oleate (1.5 parts), ferrous sulfate (FeSO₄·7H₂O) (0.002 parts), disodium ethylenediaminetetraacetate (0.005 parts), sodium formaldehyde sulfoxylate (0.2 parts), potassium tertiary phosphate (0.2 parts), butadiene (also referred to as Bd) (100 parts), and diisopropylbenzene hydroperoxide (0.1 parts) were fed in a pressure-resistant polymerization container equipped with a stirrer, and the mixture was stirred at 50°C for 12 hours. Thus, a rubber latex (R-1) with a polymerization conversion of 97% and a volume-average particle size of 0.09 µm was prepared.

### (Preparation of graft copolymer (G-1))

The rubber latex (R-1) (248 parts, 82 parts in terms of the solid content), ferrous sulfate (FeSO₄·7H₂O) (0.002 parts), disodium ethylenediaminetetraacetate (0.004 parts), sodium formaldehyde sulfoxylate (0.1 parts), and anhydrous sodium sulfate (1.1 parts) were fed in an 8-L glass polymerization container. The mixture was stirred and the temperature was controlled to 60°C. Furthermore, a mixed solution containing methyl methacrylate (also referred to as MMA) (14 parts), butyl acrylate (also referred to as BA) (1 part), and tertiary-butyl hydroperoxide (0.05 parts) was continuously added over a period of 1.5 hours. The stirring was further continued for 30 minutes. Subsequently, a mixed solution containing styrene (also referred to as ST) (3 parts) and tertiary-butyl hydroperoxide (0.1 parts) was continuously added over a period of 2 hours. The stirring was further continued for 1 hour and the resulting mixture was then cooled to normal temperature to produce a latex of graft copolymer (G-1) (Tg of the shell: 90°C). The volume-average particle size thereof was 0.21 µm.

### (Preparation of crosslinked polymer (P-1))

Deionized water (200 parts), sodium oleate (0.5 parts), ferrous sulfate (0.002 parts), disodium ethylenediaminetetraacetate (0.005 parts), and sodium formaldehyde sulfoxylate (0.2 parts) were fed in a polymerization container equipped with a stirrer and the mixture was heated to 60°C. Subsequently, a mixed solution containing methyl methacrylate (55 parts), styrene (40 parts), 1,3-butyleneglycol dimethacrylate (5 parts) (total 100 parts of monomers), and cumene hydroperoxide (0.3 parts) was continuously added over a period of 7 hours. During the addition, sodium oleate (0.5 parts each) was added after 2, 4, and 6 hours from the start of the addition of the mixed solution. After the completion of the addition of the monomeric mixed solution, postpolymerization was performed for 2 hours. Thus, a crosslinked polymer latex with a polymerization conversion of 99% and a polymeric solid content of 33 percent by weight was prepared.

### (Preparation of impact modifier I-1)

An aqueous solution of sodium alginate (ALGITEX I-3G, manufactured by Kimica Corporation) with a concentration of 1.5 percent by weight was added to the latex of graft copolymer (G-1) (polymeric solid content: 100 parts by weight) so that the solid content of sodium alginate was 0.3 parts by weight relative to 100 parts by weight of the graft copolymer (G-1). The mixture was stirred for 3 minutes to prepare a mixed latex. The mixed latex at 5°C was sprayed into droplets so as to have a volume-average droplet size of about 200 µm in a cylindrical apparatus having a diameter of 60 cm with a spiral flow-type cone nozzle, which is one of pressure nozzles. A nozzle diameter of 0.6 mm was used and the spraying pressure was 3.7 kg/cm². The spray was performed from a height of 5 m from the liquid level at the bottom of the tower. At the same time, an aqueous solution of calcium chloride with a concentration of 30 percent by weight was sprayed into droplets each having a droplet size of 0.1 to 10 µm using a two-fluid nozzle while the aqueous solution was mixed with air so that the solid content of calcium chloride was 5 to 15 parts relative to 100 parts of the graft copolymer (G-1). Furthermore, water at 40°C was continuously allowed to flow from the top of the tower along the inner wall of the tower so that the amount of water was about 750 parts relative to 100 parts of the polymeric solid content. A 3.0 percent by weight aqueous solution of partially saponified poly(vinyl alcohol) (KH-17, manufactured by Nippon Synthetic Chemical Industry Co., Ltd.) serving as a dispersant was continuously supplied to the flowing water so that the solid content of partially saponified poly(vinyl alcohol) was 0.4 parts relative to 100 parts of the polymeric solid content. The latex droplets (coagulated latex particles) dropped in the tower were fed with the flowing water into a receiving tank at the bottom of the tower to prepare an aqueous suspension of the coagulated particles having a polymeric solid content of about 10 percent by weight. The temperature of the suspension in the receiving tank was 40°C.

The crosslinked polymer (P-1) having an adjusted solid content of 5 percent by weight was added to the resulting aqueous suspension of the coagulated particles so that the amount of the crosslinked polymer (P-1) was 1 part relative to 100 parts of the solid content of the graft copolymer (G-1). Heat treatment was performed and the mixture was then dehydrated and dried to prepare a white resin powder.

### (Preparation of thermoplastic resin composition, preparation of molding, and evaluation thereof)

A vinyl chloride resin (100 parts) (Kanevinyl S-1007 manufactured by Kaneka Corporation), a tin-based stabilizer (1 part) (TVS8831 manufactured by Nitto Kasei Co., Ltd.), an internal lubricant (0.8 parts) (Loxiol G-11 manufactured by Cognis Japan Ltd.), an external lubricant (0.2 parts) (Wax E manufactured by Clariant Japan K.K.), titanium oxide (1 part), and the impact modifier (I-1) (7 parts) were kneaded at 165°C for 5 minutes with an 8-inch test roll. Subsequently, the resulting mixture was pressed for 15 minutes with a press at 180°C to prepare a molding having a thickness of 5.0 mm. The molding was formed into a test piece of No. 2 A (width: 5 mm) in accordance with Japanese Industrial Standard (JIS) K 7110, and the impact resistance strength (Izod) at 23°C of the test piece was measured. The particle size was determined as follows: The white resin powder of the impact modifier was sieved with sieves having an opening of sieve mesh of 11.2 mm and 1 mm. With respect to a powder in which the ratio of particles passing through the sieve with an opening of sieve mesh of 1 mm was 50 percent by weight or more, the volume-average particle size was measured with a MICROTRAC FRA-SVRSC (manufactured by NIKKISO Co., Ltd.). Table 1 shows the results.

### (EXAMPLE 2)

A latex of graft copolymer (G-2) and an impact modifier (I-2) were prepared, a molding was obtained, and the impact resistance strength of the molding was measured by the same process as that in Example 1 except that the amount of the rubber latex (R-1) and the composition of monomers for polymerizing the rigid shell that were described in Table 1 were used, and the amount of anhydrous sodium sulfate was adjusted. Table 1 shows the results.

### (EXAMPLE 3)

A latex of graft copolymer (G-3) and an impact modifier (1-3) were prepared, a molding was obtained, and the impact resistance strength of the molding was measured by the same process as that in Example 1 except that the amount of the rubber latex (R-1) and the composition of monomers for polymerizing the rigid shell that were described in Table 1 were used, and the amount of anhydrous sodium sulfate was adjusted. Table 1 shows the results.

### (EXAMPLE 4)

A latex of graft copolymer (G-4) and an impact modifier (I-4) were prepared, a molding was obtained, and the impact resistance strength of the molding was measured by the same process as that in Example 1 except that the amount of the rubber latex (R-1) and the composition of monomers for polymerizing the rigid shell that were described in Table 1 were used, and the amount of anhydrous sodium sulfate was adjusted. Table 1 shows the results.

### (EXAMPLE 5)

### (Preparation of butadiene rubber polymer (R-2))

Water (120 parts), sodium oleate (1.5 parts), ferrous sulfate (FeSO₄·7H₂O) (0.002 parts), disodium ethylenediaminetetraacetate (0.005 parts), sodium formaldehyde sulfoxylate (0.2 parts), potassium tertiary phosphate (0.2 parts), butadiene (100 parts), divinylbenzene (1.0 part), and diisopropylbenzene hydroperoxide (0.1 parts) were fed in a pressure-resistant polymerization container equipped with a stirrer, and the mixture was stirred at 50°C for 3 hours. Subsequently, anhydrous sodium sulfate (0.5 parts) was added and the mixture was further stirred for 12 hours. Thus, a rubber latex (R-2) with a polymerization conversion of 97% and a volume-average particle size of 0.13 µm was prepared.

### (Preparation of graft copolymer (G-5))

A latex of graft copolymer (G-5) was produced by the same process as that in Example 3 except that the rubber latex (R-2) was used and anhydrous sodium sulfate was not used.

An impact modifier (1-5) was prepared, a molding was obtained, and the impact resistance strength of the molding was measured by the same process as that in Example 1 except that the latex of graft copolymer (G-5) was used. Table 1 shows the results.

### (EXAMPLE 6)

### (Preparation of graft copolymer (G-6))

A latex of graft copolymer (G-6) was produced by the same process as that in Example 3 except that anhydrous sodium sulfate was not used.

An impact modifier (1-6) was prepared, a molding was obtained, and the impact resistance strength of the molding was measured by the same process as that in Example 1 except that the latex of graft copolymer (G-6) was used. Table 1 shows the results.

### (EXAMPLE 7)

### (Preparation of butadiene rubber polymer (R-3))

The rubber latex (R-1) (27 parts, 9 parts in terms of the solid content), water (170 parts), sodium oleate (1 part), ferrous sulfate (FeSO₄·7H₂O) (0.002 parts), disodium ethylenediaminetetraacetate (0.005 parts), sodium formaldehyde sulfoxylate (0.2 parts), potassium tertiary phosphate (0.2 parts), butadiene (91 parts), and diisopropylbenzene hydroperoxide (0.2 parts) were fed in a pressure-resistant polymerization container equipped with a stirrer, and the mixture was stirred at 50°C for 20 hours. Thus, a rubber latex (R-3) with a polymerization conversion of 97% and a volume-average particle size of 0.2 µm was prepared.

### (Preparation of graft copolymer (G-7))

A latex of graft copolymer (G-7) was produced by the same process as that in Example 3 except that the rubber latex (R-3) was used and anhydrous sodium sulfate was not used.

An impact modifier (1-7) was prepared, a molding was obtained, and the impact resistance strength of the molding was measured by the same process as that in Example 1 except that the latex of graft copolymer (G-7) was used. Table 1 shows the results.

### (COMPARATIVE EXAMPLE 1)

An impact modifier (I`-1) was prepared, a molding was obtained, and the impact resistance strength of the molding was measured by the same process as that in Example 1 except that sodium alginate was not added. Table 1 shows the results.

### (COMPARATIVE EXAMPLE 2)

An impact modifier (I'-2) was prepared, a molding was obtained, and the impact resistance strength of the molding was measured by the same process as that in Example 2 except that sodium alginate was not added. Table 1 shows the results.

### (COMPARATIVE EXAMPLE 3)

An impact modifier (I'-3) was prepared, a molding was obtained, and the impact resistance strength of the molding was measured by the same process as that in Example 3 except that sodium alginate was not added. Table 1 shows the results.

### (COMPARATIVE EXAMPLE 4)

A latex of graft copolymer (G-0) and an impact modifier (I-0) were prepared, a molding was obtained, and the impact resistance strength of the molding was measured by the same process as that in Comparative Example 1 except that the amount of the rubber latex (R-1) and the composition of monomers for polymerizing the rigid shell that were described in Table 1 were used, and the amount of anhydrous sodium sulfate was adjusted. Table 1 shows the results.

Table 1 shows the compositions of rubber latices, the volume-average particle sizes of the rubber latices, the compositions of graft latices, the glass transition temperatures of rigid shells, the volume-average particle sizes of the graft latices, the contents of water-soluble polymer compound having the physical gel-forming property (the contents of water-soluble polymer), the types of anti-blocking agents, and the particle sizes of the impact modifiers obtained in Examples 1 to 7 and Comparative Examples 1 to 4. Table 1 also shows measurement results of impact resistance strength (Izod) of moldings obtained by blending the impact modifiers produced in the examples and the comparative examples with the thermoplastic resin without sieving the impact modifiers.

**[Table 1]**

| | | Examples | | | | | | | Comparative Examples | | | |
|---|---|---|---|---|---|---|---|---|---|---|---|---|
| | | 1 | 2 | 3 | 4 | 5 | 6 | 7 | 1 | 2 | 3 | 4 |
| Rubber latex | | R-1 | R-1 | R-1 | R-1 | R-2 | R-1 | R-3 | R-1 | R-1 | R-1 | R-1 |
| Monomer | | | | | | | | | | | | |
| | Bd | 100 | 100 | 100 | 100 | 100 | 100 | 100 | 100 | 100 | 100 | 100 |
| Particle size (µm) | | 0.09 | 0.09 | 0.09 | 0.09 | 0.13 | 0.09 | 0.2 | 0.09 | 0.09 | 0.09 | 0.09 |
| Graft latex | | G-1 | G-2 | G-3 | G-4 | G-5 | G-6 | G-7 | G-1 | G-2 | G-3 | G-0 |
| Amount of rubber | | 82 | 85 | 90 | 95 | 90 | 90 | 90 | 82 | 85 | 90 | 75 |
| Monomer | | | | | | | | | | | | |
| | MMA | 14 | 12 | 10 | 5 | 10 | 10 | 10 | 14 | 12 | 10 | 20 |
| | BA | 1 | - | - | - | - | - | - | 1 | - | - | 1 |
| | St | 3 | 3 | - | - | - | - | - | 3 | 3 | - | 4 |
| Tg(°C) | | 90 | 105 | 105 | 105 | 105 | 105 | 105 | 90 | 105 | 105 | 94 |
| Particle size (µm) | | 0.21 | 0.21 | 0.21 | 0.2 | 0.14 | 0.1 | 0.21 | 0.21 | 0.21 | 0.21 | 0.21 |
| Impact modifier | | I-1 | I-2 | I-3 | I-4 | I-5 | I-6 | I-7 | I'-1 | I'-2 | I'-3 | 1-0 |
| Content of water-soluble polymer | | 0.3 | 0.3 | 0.3 | 0.3 | 0.3 | 0.3 | 0.3 | - | - | - | - |
| Anti-blocking agent Particle size | | Crosslinked polymer A | Crosslinked polymer A | Crosslinked polymer A | Crosslinked polymer A | Crosslinked polymer A | Crosslinked polymer A | Crosslinked polymer A | Crosslinked polymer B | Crosslinked polymer C | Crosslinked polymer C | Crosslinked polymer A |
| Izod | | 25 | 34 | 50 | 63 | 42 | 40 | 44 | 20 | 21 | 21 | 17 |

| | | | | | | | | | | | | |
|---|---|---|---|---|---|---|---|---|---|---|---|---|
| Determination of particle size A: The volume-average particle size is 75 to 700 µm. B: Fifty percent by weight or more of particles has a particle size of 1 to 11.2 mm. C: Fifty percent by weight or more of particles has a particle size of 11.2 mm or more. | | | | | | | | | | | | |

Examples 1 to 7 and Comparative Examples 1 to 3 show that, by incorporating 0.01 to 3.0 parts of a water-soluble polymer compound (b-2) having the physical gel-forming property relative to 100 parts of a graft copolymer (b-1), graft copolymers (b-1) that hardly include coarsened or agglomerated particles and that have a ratio by weight of butadiene rubber polymer/rigid shell of 80/20 to 99/1 can be obtained. Thermoplastic resin compositions containing these graft copolymers can exhibit the effect of improving impact resistance at a high level.

Examples 1 to 7 and Comparative Example 4 show that when the ratio by weight of butadiene rubber polymer/rigid shell in the graft copolymer (b-1) is in a range of 80/20 to 99/1, high effect of improving impact resistance can be achieved.

### (EXAMPLE 8)

### (Preparation of butadiene rubber polymer (R-4))

Water (200 parts), sodium oleate (1.5 parts), ferrous sulfate (FeSO₄·7H₂O) (0.002 parts), disodium ethylenediaminetetraacetate (0.005 parts), sodium formaldehyde sulfoxylate (0.2 parts), potassium tertiary phosphate (0.2 parts), butadiene (45 parts), styrene (24 parts), divinylbenzene (also referred to as DVB) (1.0 part), and diisopropylbenzene hydroperoxide (0.1 parts) were fed in a pressure-resistant polymerization container equipped with a stirrer, and the mixture was stirred at 50°C for 7 hours. Subsequently, butadiene (30 parts) and diisopropylbenzene hydroperoxide (0.05 parts) were added to the mixture. Two hours later, diisopropylbenzene hydroperoxide (0.05 parts) was further added, and the resulting mixture was stirred for 5 hours. Thus, a rubber latex (R-4) with a polymerization conversion of 97% and a volume-average particle size of 0.09 µm was prepared.

### (Preparation of graft copolymer (G-8))

The rubber latex (R-4) (248 parts, 82 parts in terms of the solid content), ferrous sulfate (FeSO₄·7H₂O) (0.002 parts), disodium ethylenediaminetetraacetate (0.004 parts), sodium formaldehyde sulfoxylate (0.1 parts), and anhydrous sodium sulfate (1.5 parts) were fed in an 8-L glass polymerization container. The mixture was stirred and the temperature was controlled to 60°C. Furthermore, a mixed solution containing methyl methacrylate (9 parts), butyl acrylate (1 part), and tertiary-butyl hydroperoxide (0.05 parts) was continuously added over a period of 1.5 hours. The stirring was further continued for 30 minutes. Subsequently, a mixed solution containing styrene (8 parts) and tertiary-butyl hydroperoxide (0.1 parts) was continuously added over a period of 2 hours. The stirring was further continued for 1 hour and the resulting mixture was then cooled to normal temperature to produce a latex of graft copolymer (G-8) (Tg of the shell: 90°C). The volume-average particle size thereof was 0.18 µm.

An impact modifier (1-8) was prepared by the same process as that in Example 1 except that the latex of graft copolymer (G-8) was used.

### (Preparation of thermoplastic resin composition, preparation of molding, and evaluation thereof)

A vinyl chloride resin (100 parts) (Kanevinyl S-1007 manufactured by Kaneka Corporation), a tin-based stabilizer (1 part) (TVS8831 manufactured by Nitto Kasei Co., Ltd.), an internal lubricant (0.8 parts) (Loxiol G-11 manufactured by Cognis Japan Ltd.), an external lubricant (0.2 parts) (Wax E manufactured by Clariant Japan K.K.), and the impact modifier (1-8) (8 parts) were kneaded at 165°C for 5 minutes with an 8-inch test roll. Subsequently, the resulting mixture was pressed for 15 minutes with a press at 180°C to prepare a molding having a thickness of 5.0 mm. The impact resistance strength (Izod) of the molding and the particle size were measured by the same processes as those in Example 1. Furthermore, the haze was measured in accordance with JIS K 7105. Table 2 shows the results.

### (EXAMPLE 9)

A latex of graft copolymer (G-9) and an impact modifier (I-9) were prepared, a molding was obtained, and the impact resistance strength etc. of the molding was measured by the same process as that in Example 8 except that the amount of the rubber latex (R-4) and the composition of monomers for polymerizing the rigid shell that were described in Table 2 were used, and the amount of anhydrous sodium sulfate was adjusted. Table 2 shows the results.

### (EXAMPLE 10)

A latex of graft copolymer (G-10) and an impact modifier (I-10) were prepared, a molding was obtained, and the impact resistance strength etc. of the molding was measured by the same process as that in Example 8 except that the amount of the rubber latex (R-4) and the composition of monomers for polymerizing the rigid shell that were described in Table 2 were used, and the amount of anhydrous sodium sulfate was adjusted. Table 2 shows the results.

### (EXAMPLE 11)

A latex of graft copolymer (G-11) and an impact modifier (I-11) were prepared, a molding was obtained, and the impact resistance strength etc. of the molding was measured by the same process as that in Example 8 except that the amount of the rubber latex (R-4) and the composition of monomers for polymerizing the rigid shell that were described in Table 2 were used, and the amount of anhydrous sodium sulfate was adjusted. Table 2 shows the results.

### (EXAMPLE 12)

### (Preparation of butadiene rubber polymer (R-5))

Water (120 parts), sodium oleate (1.5 parts), ferrous sulfate (FeSO₄-7H₂O) (0.002 parts), disodium ethylenediaminetetraacetate (0.005 parts), sodium formaldehyde sulfoxylate (0.2 parts), potassium tertiary phosphate (0.2 parts), butadiene (45 parts), styrene (24 parts), divinylbenzene (1.0 part), and diisopropylbenzene hydroperoxide (0.1 parts) were fed in a pressure-resistant polymerization container equipped with a stirrer, and the mixture was stirred at 50°C for 3 hours. Anhydrous sodium sulfate (0.5 parts) was then added and the resulting mixture was further stirred for 7 hours. Subsequently, butadiene (30 parts) and diisopropylbenzene hydroperoxide (0.05 parts) were added to the mixture. Two hours later, diisopropylbenzene hydroperoxide (0.05 parts) was further added, and the resulting mixture was stirred for 5 hours. Thus, a rubber latex (R-5) with a polymerization conversion of 97% and a volume-average particle size of 0.13 µm was prepared.

### (Preparation of graft copolymer (G-12))

A latex of graft copolymer (G-12) was produced by the same process as that in Example 10 except that the rubber latex (R-5) was used and anhydrous sodium sulfate was not used.

An impact modifier (1-12) was prepared, a molding was obtained, and the impact resistance strength etc. of the molding was measured by the same process as that in Example 1 except that the latex of graft copolymer (G-12) was used. Table 2 shows the results.

### (EXAMPLE 13)

### (Preparation of graft copolymer (G-13))

A latex of graft copolymer (G-13) was produced by the same process as that in Example 10 except that anhydrous sodium sulfate was not used.

An impact modifier (1-13) was prepared, a molding was obtained, and the impact resistance strength etc. of the molding was measured by the same process as that in Example 1 except that the latex of graft copolymer (G-13) was used. Table 2 shows the results.

### (EXAMPLE 14)

### (Preparation of butadiene rubber polymer (R-6))

The rubber latex (R-4) (45 parts, 15 parts in terms of the solid content), water (170 parts), sodium oleate (1 part), ferrous sulfate (FeSO₄·7H₂O) (0.002 parts), disodium ethylenediaminetetraacetate (0.005 parts), sodium formaldehyde sulfoxylate (0.2 parts), potassium tertiary phosphate (0.2 parts), butadiene (64.6 parts), styrene (20.4 parts), divinylbenzene (0.9 parts), and diisopropylbenzene hydroperoxide (0.2 parts) were fed in a pressure-resistant polymerization container equipped with a stirrer, and the mixture was stirred at 50°C for 20 hours. Thus, a rubber latex (R-6) with a polymerization conversion of 97% and a volume-average particle size of 0.17 µm was prepared.

### (Preparation of graft copolymer (G-14))

A latex of graft copolymer (G-14) was produced by the same process as that in Example 10 except that the rubber latex (R-6) was used and anhydrous sodium sulfate was not used.

An impact modifier (I-14) was prepared, a molding was obtained, and the impact resistance strength etc. of the molding was measured by the same process as that in Example 1 except that the latex of graft copolymer (G-14) was used. Table 2 shows the results.

### (EXAMPLE 15)

An impact modifier (1-15) was prepared, a molding was obtained, and the impact resistance strength etc. of the molding was measured by the same process as that in Example 10 except that, in place of the crosslinked polymer, a silicone oil (SH200-350CS manufactured by Shin-Etsu Chemical Co., Ltd.) was added so that the amount of the silicone oil was 0.3 parts relative to 100 parts of the solid content of the graft copolymer (G-10). Table 2 shows the results.

### (EXAMPLE 16)

An impact modifier (1-16) was prepared, a molding was obtained, and the impact resistance strength etc. of the molding was measured by the same process as that in Example 10 except that the amount of sodium alginate added was 2.5 parts. Table 2 shows the results.

### (COMPARATIVE EXAMPLE 5)

An impact modifier (I'-8) was prepared, a molding was obtained, and the impact resistance strength etc. of the molding was measured by the same process as that in Example 8 except that sodium alginate was not added. Table 2 shows the results.

### (COMPARATIVE EXAMPLE 6)

An impact modifier (I'-9) was prepared, a molding was obtained, and the impact resistance strength etc. of the molding was measured by the same process as that in Example 9 except that sodium alginate was not added. Table 2 shows the results.

### (COMPARATIVE EXAMPLE 7)

An impact modifier (I'-10) was prepared, a molding was obtained, and the impact resistance strength etc. of the molding was measured by the same process as that in Example 10 except that sodium alginate was not added. Table 2 shows the results.

Table 2 shows the compositions of rubber latices, the volume-average particle sizes of the rubber latices, the compositions of graft latices, the glass transition temperatures of rigid shells, the volume-average particle sizes of the graft latices, the contents of water-soluble polymer compound having the physical gel-forming property (the contents of water-soluble polymer), the types of anti-blocking agents, and the particle sizes of the impact modifiers obtained in Examples 8 to 16 and Comparative Examples 5 to 7. Table 2 also shows measurement results of impact resistance strength (Izod) and the haze of moldings obtained by blending the impact modifiers produced in the examples and the comparative examples with the thermoplastic resin without sieving the impact modifiers.

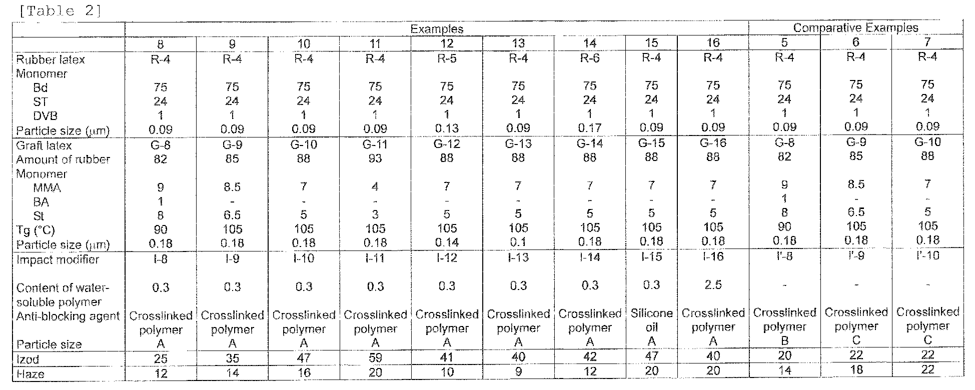

Examples 8 to 16 and Comparative Examples 5 to 7 show that, by incorporating 0.01 to 3.0 parts of a water-soluble polymer compound (b-2) having the physical gel-forming property relative to 100 parts of a graft copolymer (b-1), graft copolymers (b-1) that hardly include coarsened or agglomerated particles and that have a ratio by weight of butadiene rubber polymer/rigid shell of 80/20 to 99/1 can be obtained. Thermoplastic resin compositions containing these graft copolymers can exhibit the effect of improving impact resistance at a high level while maintaining the transparency.

## Claims

1. A thermoplastic resin composition comprising 100 parts by weight of a thermoplastic resin (a) and 0.5 to 20 parts by weight of an impact modifier (b) containing a graft copolymer (b-1) containing a butadiene rubber polymer and a rigid shell, a water-soluble polymer compound (b-2) having a physical gel-forming property, and a gelling agent (b-3), wherein the content of the water-soluble polymer compound (b-2) having the physical gel-forming property is 0.01 to 3.0 parts by weight relative to 100 parts by weight of the graft copolymer (b-1) and the content of the rigid shell in the graft copolymer (b-1) is 1 to 20 percent by weight.

2. The thermoplastic resin composition according to claim 1, wherein the rigid shell in the graft copolymer (b-1) is a rigid shell prepared by polymerizing a monomeric mixture containing 0 to 100 percent by weight of a (meth)acrylic ester, 0 to 90 percent by weight of an aromatic vinyl monomer, 0 to 25 percent by weight of a vinyl cyanide monomer, and 0 to 20 percent by weight of a vinyl monomer copolymerizable with the (meth)acrylic ester, the aromatic vinyl monomer, and the vinyl cyanide monomer, the rigid shell having a glass transition temperature of 30°C or higher.

3. The thermoplastic resin composition according to claim 1 or claim 2, wherein the butadiene rubber polymer in the graft copolymer (b-1) has a volume-average particle size of 0.05 to 1.0 µm.

4. The thermoplastic resin composition according to any one of claims 1 to 3, wherein the graft copolymer (b-1) comprises 2 to 16 percent by weight of the rigid shell.

5. The thermoplastic resin composition according to any one of claims 1 to 4, wherein the graft copolymer (b-1) comprises 2 to 13 percent by weight of the rigid shell.

6. The thermoplastic resin composition according to any one of claims 1 to 5, wherein the impact modifier (b) further comprises 0.05 to 3.0 parts by weight of an anti-blocking agent (b-4) relative to 100 parts by weight of the graft copolymer (b-1).

7. The thermoplastic resin composition according to any one of claims 1 to 6, wherein the impact modifier (b) comprises 0.05 to 1.8 parts by weight of the water-soluble polymer compound (b-2) having the physical gel-forming property relative to 100 parts by weight of the graft copolymer (b-1).

8. The thermoplastic resin composition according to any one of claims 1 to 7, wherein the water-soluble polymer compound (b-2) having the physical gel-forming property is at least one compound selected from hydroxyethylmethylcellulose, hydroxypropylmethylcellulose, carboxymethylcellulose, water-soluble alginic acid derivatives, agar, gelatin, carrageenan, glucomannan, pectin, curdlan, gellan gum, and polyacrylic acid derivatives.

9. The thermoplastic resin composition according to claim 8, wherein the water-soluble polymer compound (b-2) having the physical gel-forming property is a water-soluble alginic acid derivative.

10. The thermoplastic resin composition according to claim 6, wherein the anti-blocking agent (b-4) is a crosslinked polymer.

11. The thermoplastic resin composition according to claim 6, wherein the anti-blocking agent (b-4) is a silicone oil.

12. The thermoplastic resin composition according to any one of claims 1 to 11, wherein the thermoplastic resin is a vinyl chloride resin.
